# EUROPEAN PATENT APPLICATION

(11) **EP 4 668 669 A1**
(43) Date of publication of application: **24.12.2025**
(21) Application number: 24183151.0
(22) Date of filing: 19.06.2024
(51) Int. Cl.: H04L 9/08, H04J 3/06

(54) **QUANTUM INFORMATION NETWORK AND METHOD OF ENTANGLEMENT SWAPPING THEREIN**

(71) Applicant: Nederlandse Organisatie voor toegepast-natuurwetenschappelijk Onderzoek TNO, 2595 DA 's-Gravenhage (NL)
(72) Inventor: Van Deventer, Mattijs Oskar, 2595 DA 's-Gravenhage (NL); Castro do Amaral, Gustavo, 2595 DA 's-Gravenhage (NL)
(74) Representative: V.O.

(57) **Abstract**

The present application provides a method of entanglement swapping in a quantum information network (1) comprising a plurality of nodes including a first and a second endpoint (11a, 11e) and a sequence of intermediary nodes (11b, 11c, 11d) linking the first and the second endpoint. The claimed method comprises repeated entanglement swapping mediated by a BSM-based LOCC between two adjacent elementary links. Upon confirming that all Bell-state measurements are successful, a combined quantum state postprocessing is performed that is conditional on a result of a combined Boolean logic operation. The present application further pertains to a corresponding quantum information network and to an intermediary node for the network.

## Description

The present invention pertains to a quantum information network.

The present invention further pertains to a method of entanglement swapping therein.

A quantum communication network requires the distribution of entangled photon pairs, generated by an entangled photon-pair source (EPPS), to a pair of nodes in the network. The EPPS operates for example on the basis of spontaneous parametric down conversion. Therewith a quantum communication link is rendered possible between the pair of nodes. Due to inevitable photon losses, such as attenuation in optical fibers and beam divergence in free-space optics, a single EPPS can cover only a limited distance between the pair of nodes. In order to address this limitation it is contemplated to concatenate a plurality of individual quantum communication links into a quantum communication chain using quantum repeaters (QR).

The key component of a QR is a Bell-state measurement (BSM). When a BSM is successful (detected two-photon coincidence event, or other), the QR signals this success to the two the pair of nodes with a well timed and synchronized signal. Depending on the type of BSM (full, partial) and system, the success signal is accompanied by zero, one or two bits, a.k.a. local operations and classical communication (LOCC) containing the outcome of the BSM. I.e. the success signal may be represented by one bit that indicates success/no success. A partial BSM result, which is relevant in case of success, may be represented by one further bit and full BSM result, which is relevant in case of success, may be represented by a pair of further bits. Those accompanying bits are used to perform unitary operations that modify the quantum state encoded into the photons ("photonic qubits") such that the joint quantum state of the two remaining photons of either pair (that never interacted) become entangled.".

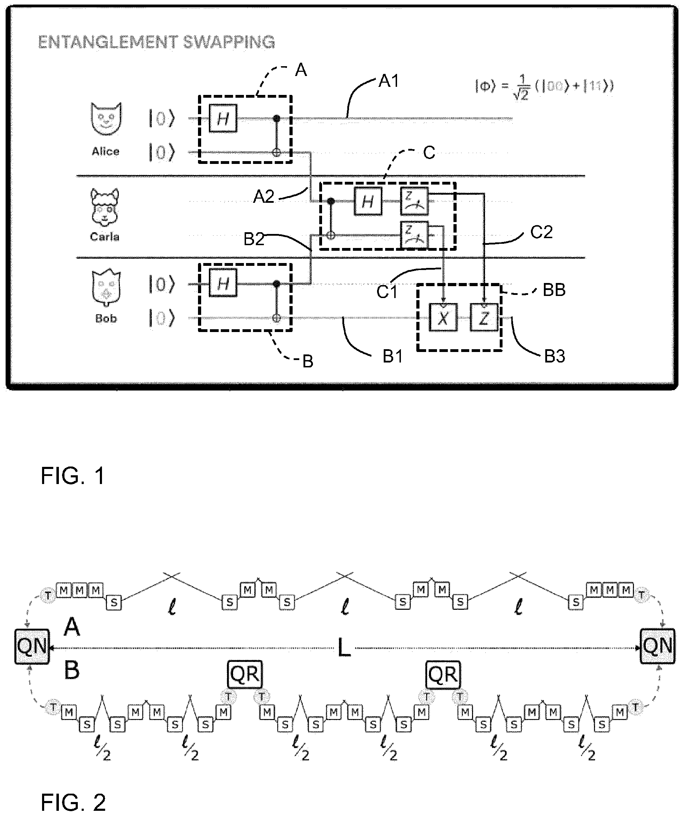

The principle of this operation is shown in more detail in FIG. 1. Two parties, here denoted as Alice and Bob each prepare an entangled state with their respective entanglement units A, B, at their respective location. They keep one part A1, B1 of their entangled state and send the other part A2, B2 to an intermediate station denoted as Carla. At this intermediate station a Bell-state measurement unit C performs a Bell-state projection measurement, further denoted as Bell-state measurement and outputs Bell-state measurement data comprising at least one classical bit indicative for the measurement, which measurement data is transmitted by classical communication means to the party denoted as Bob. In accordance with the transmitted classical data the unitary transformation unit BB subsequently performs a conditional unitary transformation to the part B1 of the entangled state generated by entanglement unit B to obtain B3, which is entangled with A1.

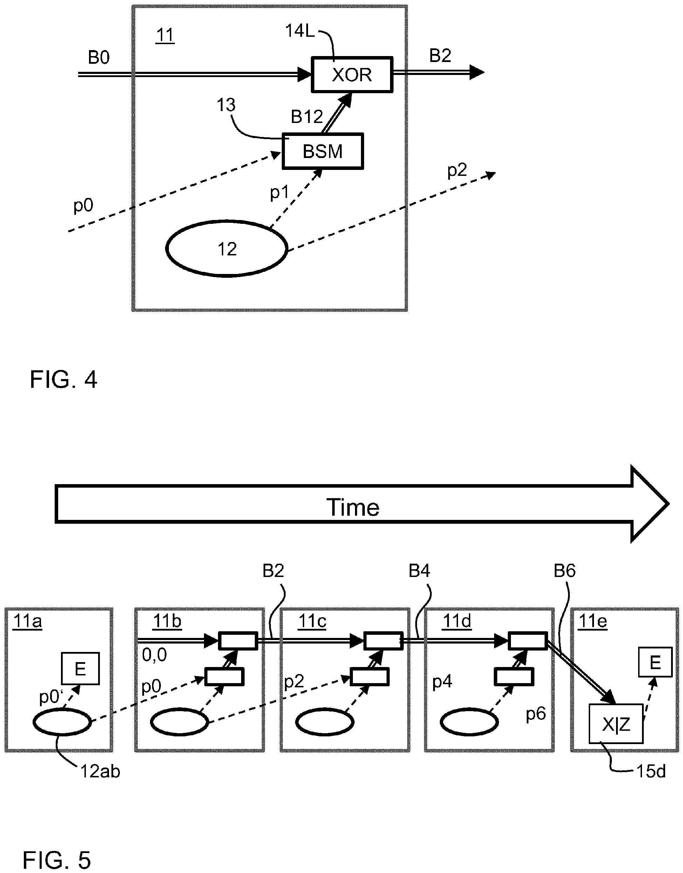

Gustavo Castro do Amaral et al, analyses the architecture of QR systems, and technologies needed for concatenating quantum communication links into a quantum communication chain, so that a longer distance can be bridged. See "Entanglement distribution in multi-platform buffered-router-assisted frequency-multiplexed automated repeater chains", 2021 New J. Phys. 23 063078. FIG. 4, reproduced herein as FIG. 2, shows two configurations A, B. Therein the symbol M denotes a quantum memory. In configuration A, extra quantum memories M are provided at the edges of the automatic repeater chains (ARC) that enforce synchronous arrival of photonic qubits and complete ARC information at the quantum router QRs connected to the ARCs while maintaining the elementary link 1 parameterized by the QM's storage time. In configuration B, the length of the elementary link is reduced by a factor ξ= 2 to enforce synchronous arrival within the ARC; although extra quantum memories are not necessary at the edges of the ARC, multiple ARCs are required to cover the same distance as in A.

An efficient operation of a quantum communication network relies on the rate at which it is possible to generate entangled photon pairs. One approach to control this rate is the choice of the implementation complexity. For example in case the system comprises a single intermediate node as shown it is an option to perform a full Bell-state measurement resulting in a pair of bits indicative for the result thereof, and to perform a unitary operation that is conditional on both bits. For example as shown in the implementation of FIG. 1, the unitary transformation unit BB performs a conditional X transformation and a conditional Z operation to the part B 1 of the entangled state generated by entanglement unit B to obtain B3. Therein the conditional X transformation is controlled by classical bit C1 and the conditional Y transformation is controlled by the classical bit C2. This has the advantage that a high EPP generation is achieved, but has the disadvantage that the implementation complexity is relatively high. On the other hand the implementation complexity may be reduced by omitting the unitary transformation unit BB altogether and selecting only those cases wherein no unitary transformation is required. However, this entails a strong reduction in the EPP generation rate. There is a need to enable a relatively high EPP generation rate with a relatively modest complexity.

### SUMMARY

According to a first aspect the present disclosure provides an improved method of entanglement swapping in a quantum information network comprising a plurality of nodes including a first and a second endpoint (E) and a sequence of quantum repeaters linking the first and the second endpoint that addresses the above-mentioned need.

According to a second aspect the present disclosure provides an improved quantum information network that addresses the above-mentioned need.

The improved method of entanglement swapping according to the first aspect comprises:
generating a respective entangled photon-pair (EPP) for each pair of a node and a node directly succeeding that node, the EPP comprising a respective first photon to be received by the node and a respective second photon, entangled with the respective first photon to be received by the directly succeeding node,
for each intermediary node performing a Bell-state measurement on the respective second photon of the respective photon pair generated for the pair comprising that intermediary node and the node preceding that intermediary node and the respective first photon of the respective photon pair generated for the pair comprising that intermediary node and the node succeeding that intermediary node, wherein each Bell-state measurement provides at least a respective first bit that indicates whether or not the measurement is successful and a respective further bit that is indicative for a Bell-state measurement result,
determining whether all Bell-state measurements were successfully performed, and if that is confirmed performing a combined Boolean logic operation to all respective further bits,
performing a combined quantum state postprocessing that is conditional on a result of the combined Boolean logic operation.

In each intermediary node an entanglement swap is performed. If all entanglement swaps are successful this results in the generation of an entanglement between a photon received by a first one of the endpoints and a photon received by the other one of the endpoints. Some of the entanglement swaps in the concatenation may be local, e.g. between an incoming photon and a qubit in a quantum memory, or between two quantum memories. The invention may also be applied inside quantum processing units (QPU, a.k.a. quantum computer) when there are multiple entanglement swaps in a row, or in the interconnection of quantum computers and quantum communication.

In an embodiment of the method, the photon generation and arrival times are tuned such that no additional quantum memory (additional to time-of-flight) is needed.

In an embodiment the Bell-state measurements each provide a single respective further bit and wherein the combined Boolean logic operation is applied to all single respective further bits to output a single control bit. In some examples of this embodiment the combined postprocessing is a unitary operation on the quantum state of the respective second photon received by the second endpoint, the unitary operation being controlled by the single control bit. In other examples of this embodiment the combined postprocessing is a selection of the quantum state of the respective second photon received by the second endpoint, the selection being conditional on the single control bit.

In another embodiment the Bell-state measurements each provide a respective pair of further bits and wherein the combined Boolean logic operation is applied to all respective pairs of further bits to output a pair of control bits. In some examples of this embodiment the combined postprocessing is a unitary operation on the quantum state of the respective second photon received by the second endpoint, the unitary operation being controlled by the pair of control bits. In other examples of this embodiment the combined postprocessing is a selection of the quantum state of the respective second photon received by the second endpoint, the selection being conditional on the pair of control bits.

A combined postprocessing, for example a unitary operation on a quantum state does not necessarily need to be performed at the receiving endpoint. For example, in an embodiment, the transmitting endpoint outputs one or two LOCC bits towards the first intermediary node. These bits can be part of a distributed quantum operation between the endpoints. The transmitting endpoint can also use this to control that different entangled photonic qubits are selected, e.g. for scenarios where the receiving endpoint does not have a controlled unitary gate.

According to a second aspect of the present disclosure an improved quantum information network is provided that comprises a plurality of nodes arranged as a chain, including a pair of endpoints and one or more intermediary nodes. The improved quantum information network further comprises a respective entangled photon-pair (EPP) generator for each pair of neighboring nodes, a respective Bell-state measurement unit for each intermediary node, Boolean logic and a post-processing facility.

The plurality of nodes include a first and a second endpoint and a sequence of intermediary nodes linking the first and the second endpoint;
An EPP generated by an EPP generators associated with a node comprises a first photon to be received by the node and a second photon, entangled with the respective first photon to be received by the directly succeeding node.

The respective Bell-state measurement unit performs a Bell-state measurement on a pair of photons. The first photon thereof is the second photon of the respective EPP generated for the node-pair with the node comprising the intermediary node and the node preceding that intermediary node. The second photon of the pair is the first photon of the photon pair generated for the node pair comprising the intermediary node and the node succeeding that intermediary node. Each Bell-state measurement unit provides at least a respective first bit that indicates whether or not the measurement is successful and a respective further bit that is indicative for a Bell-state measurement result. The Boolean logic confirms whether all Bell-state measurements were successfully performed, in which case a success is heralded and further performs a combined Boolean logic operation to all respective further bits. The post-processing facility is controlled by a result of the combined Boolean logic operation for performing a post-processing on a quantum state transmitted in the quantum information network. Post-processing may comprise one or more controlled unitary operations, but may alternatively comprise a controlled selection or rejection of a quantum state dependent on the result of the combined Boolean logic operation.

In an embodiment, the intermediary nodes support synchronization and LOCC operations between the endpoints.

According to a third aspect an intermediary node for use in the improved quantum information network is provided that comprises:
an entangled photon-pair (EPP) generator to generate an entangled photon-pair comprising a first photon and a second photon to be transmitted to a recipient;
a Bell-state measurement unit configured to perform a Bell-state measurement on a received photon and the first photon of the entangled photon-pair and to output at least one internal Boolean value indicative for a result of the Bell-state measurement;
a Boolean logic component configured to perform a Boolean operation on a received Boolean value and the at least one internal Boolean value and to transmit an output Boolean value to the recipient.

### BRIEF DESCRIPTION OF THE DRAWINGS

These and other aspects are shown in more detail with reference to the drawings. Therein:
FIG. 1 schematically shows a process of entanglement swapping;
FIG. 2 show a known implementation of an intermediary node chain;
FIG. 3 schematically shows an embodiment of an improved quantum information network;
FIG. 3A shows a comparison between the presently disclosed approach and the known approach;
FIG. 3B shows an aspect of the embodiment of FIG. 3 in more detail;
FIG. 4 shows an example of an improved intermediary node;
FIG. 5 shows an embodiment of an improved quantum information network comprising a plurality of intermediary nodes as shown in FIG. 4;
FIG. 6 shows another embodiment of an improved quantum information network;
FIG. 7 schematically shows an embodiment of an improved method of entanglement swapping in a quantum information network;
FIG. 8 schematically shows a relationship between an end-to-end EPP generation rate and a complexity of an improved quantum information network in comparison to that of a known quantum information network.

### DETAILED DESCRIPTION OF EMBODIMENTS

In the following detailed description numerous specific details are set forth in order to provide a thorough understanding of the present invention. However, it will be understood by one skilled in the art that the present invention may be practiced without these specific details. In other instances, well known methods, procedures, and components have not been described in detail so as not to obscure aspects of the present invention.

Like reference symbols in the various drawings indicate like elements unless otherwise indicated.

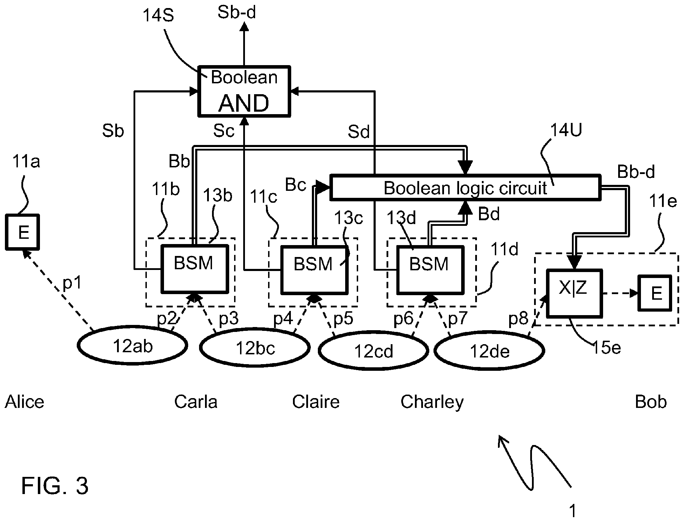

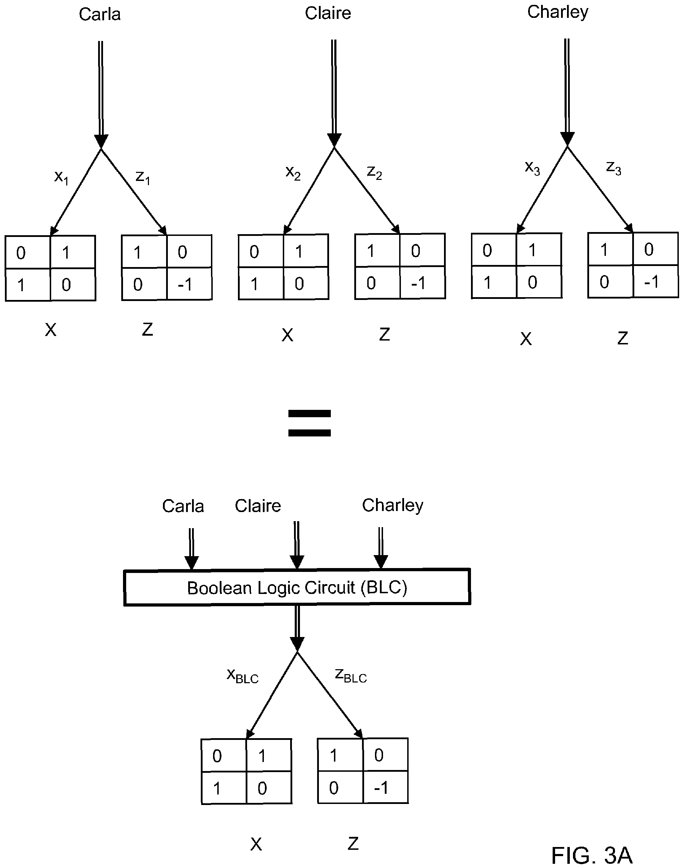

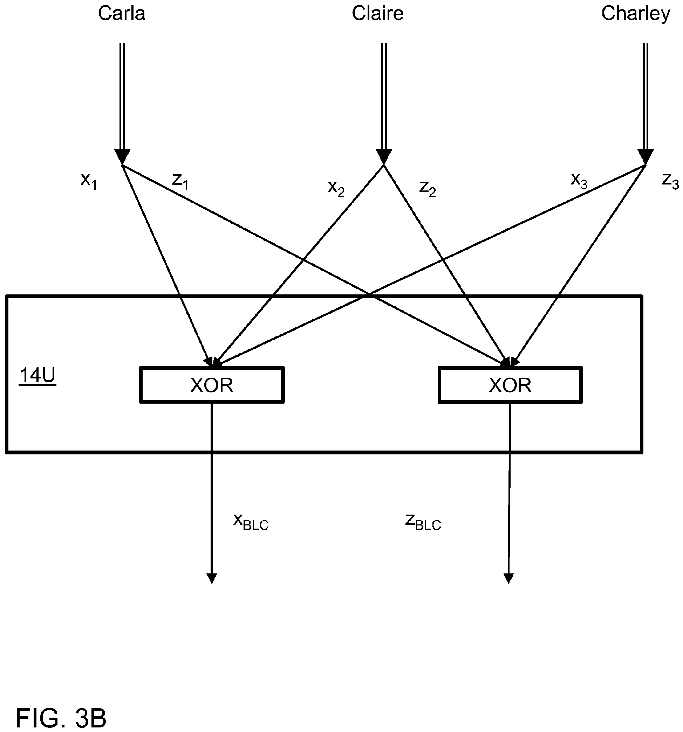

FIG. 3 schematically shows a quantum information network 1 that comprises a plurality of nodes 11a, 11b, 11c, 11d, 11e, of which 11b, 11c, 11d are intermediary nodes and 11a and 11e are endpoints, a respective entangled photon-pair (EPP) generator 12ab, 12bc, 12cd, 12de for each pair of a node and a node directly succeeding that node, a respective Bell-state measurement unit 13b, 13c, 13d for each intermediary node, and Boolean logic 14S, 14I. Therewith a quantum repeater chain is formed by the concatenation of elementary links. While the concatenation itself is performed via entanglement swapping mediated by a BSM-based LOCC between two adjacent elementary links (usually referred to as a local BSM), within the elementary links there is a remote LOCC step, where the photons propagate towards a distant (remote) BSM and from which the heralding signals are transmitted. Nodes 11b, 11c, and 11d correspond to elementary components displaced in one of the many configurations an elementary link node can exhibit. As such, they represent constituent components of the quantum repeater architecture. In these and the following drawings dashed lines indicate transmitted photons. The single and double solid lines indicate Boolean signals.

An entangled photon-pair EPP generated with an EPP-generator comprises a first photon to be received by a node and a respective second photon, entangled with the first photon to be received by the directly succeeding node. For example the EPP-generator 12ab generates entangled photon pairs p1, p2 comprising a photon p1 to be received by endpoint 11a and a photon p2 to be received by intermediary node 11b.

Each respective Bell-state measurement unit performs a Bell-state measurement on a pair of photons. The first photon thereof is the second photon of the respective EPP generated for the node-pair with the node comprising the intermediary node and the node preceding that intermediary node. The second photon of the pair is the first photon of the photon pair generated for the node pair comprising the intermediary node and the node succeeding that intermediary node. For example the Bell-state measurement unit 13b of node 11b receives the pair of photons p2, p3. The first photon p2 thereof is the second photon of the EPP generated for the node-pair with the intermediary node 11b and the node 11a preceding the intermediary node 11b. The second photon p3 of the pair is the first photon of the photon pair p3, p4 generated for the node pair comprising the intermediary node 11b and the node 11c succeeding that intermediary node.

The Bell-state measurement unit provides at least a respective first bit that indicates whether or not the measurement is successful and a respective further bit that is indicative for a Bell-state measurement result. In this example the Bell-state measurement units 13b, 13c, 13d respectively provide the first bits Sb, Sc, Sd and the respective further bits Bb, Bc, Bd.

The Boolean logic comprises first logic circuitry 14S that is configured for confirming whether all Bell-state measurements were successfully performed, which is necessary for communicating a quantum state. The output value Sb-d indicating this condition is heralded, e.g. to the two endpoints 11a and 11e.

The Boolean logic comprises second logic circuitry 14U that is configured for performing a combined Boolean logic operation to all respective further bits Bb, Bc, Bd and it outputs at least one control bit Bb-d. Various implementations are possible depending requirements of throughput and constraints on circuit complexity.

The quantum information network 1 further comprises a post-processing facility 15e, here being a part of the end node 11e that is controlled by a result of the combined Boolean logic operation, for performing a post-processing on a quantum state transmitted in the quantum information network 1. Therewith the post-processing facility 15e replaces local post-processing as would according to a naive approach be used in each intermediary node. This is based on the observation that X and Z operations are commutative (except for an unnoticeable phase factor). This means that one can swap the order of the operations, combine all X operations and combine all Z operations. Both X and Z operations are self-inverse: XX=I and ZZ=I. So an odd number of X operations is equivalent to a single X operation, and an even number to the identity operation I. Likewise an odd number of Z operations is equivalent to a single Z operation, and an even number to the identity operation I. Therewith the control signal for a common conditional X-gate can be obtained by an XOR-operation to the control bits that in the naive approach would control the individual conditional X-gates. Similarly, the control signal for a common conditional Z-gate can be obtained by an XOR-operation to the control bits that in the naive approach would control the individual conditional Z-gates.

FIG. 3A shows how the approach according to the present invention significantly reduces complexity. The upper part of FIG. 3A shows a naive approach, wherein each intermediary node performs a conditional unitary operation X, Z according to its Bell-state measurement. In the example shown Carla performs the unitary operation X, Z conditional on bits x1, z1 on the quantum state to be transferred to Claire. Claire performs the unitary operation X, Z conditional on bits x2, z2 on the quantum state received from Carla and transfers the conditionally transferred quantum state to Charley. Charley performs the unitary operation X, Z conditional on bits x3, z3 on the quantum state received from Claire and transfers the conditionally transferred quantum state to the next node etc.

The lower part shows a significantly reduced complexity in the approach according to the present invention. The inventive approach requires only a combined postprocessing operation the quantum communication chain even if it comprises a plurality of intermediary nodes, e.g. a unitary operation or a selection conditional on the combined Boolean logic operation 14U. Also, due to the fact that the total number of quantum gates, which in practice are not perfect, is reduced, does this contribute to an enhanced reliability of the quantum communication channel between the endpoints. An example of the combined Boolean logic operation 14U is shown in FIG. 3B. In this example, the combined Boolean logic operation 14U is localized. Alternatively, the combined Boolean logic operation 14U may be distributed as shown in the sequel.

In the example presented with reference to FIG. 3 and FIG. 3A, it is presumed that a complete Bell-state measurement is performed and that a full conditional unitary transformation is performed based on the pair of bits retrieved from the Bell-state measurement. However, alternative implementations are possible. Examples thereof are briefly shown in the following table, and will be discussed in more detail below.

| **BSM\BLC** | **C-X and/or C-Z** | **No C-X, No C-Z** |
|---|---|---|
| **Partial** | (a) 1-bit in | (b) Select only "0" |
| | 1-bit out | |
| | to C-X or C-Z | |
| **Full** | (c) 2-bit in | (d) Select only "0,0" |
| | 1-bit out to C-X and | |
| | 1-bit out to C-Z | |

The first row in the table indicated as "Partial" is the option wherein only one bit of the Bell-state measurement is used, e.g. because the Bell-state measurement produces only one further bit. In one example, the output bit from the second logic circuitry can be used for (a) controlling a conditional unitary operation, e.g. C-X or C-Z on the photon p8 received from the intermediary node 12de, or (b) to perform a selection. In the first case (a) the communicated quantum state is the quantum state obtained by the conditional unitary operation performed on the quantum state of the received photon p8. In the second case (b) the communicated quantum state is the quantum state of the received photon p8, provided that the output bit indicates that this quantum state can be selected.

The second row in the table indicated as "Full" is the option wherein the Bell-state measurement generates two further bits, and both bits of the Bell-state measurement are used. In one example, the output bits from the second logic circuitry can be used for (c) controlling a conditional unitary operation, e.g. C-X + C-Z on the photon p8 received from the intermediary node 12de, or (d) to perform a selection. In the first case (c) the communicated quantum state is the quantum state obtained by the conditional unitary operation performed on the quantum state of the received photon p8. In the second case (d) the communicated quantum state is the quantum state of the received photon p8, provided that the output bits indicate that this quantum state can be selected.

The options (b) or (d) may be combined with the heralding, where Boolean logic circuit 14S only heralds success if all Bell-state measurements are successful AND the output bits indicate that this quantum state can be selected: "0" or "00" case.

FIG. 4 shows an example of a intermediary node 11. The exemplary intermediary node 11 comprises an entangled photon-pair (EPP) generator 12, a Bell-state measurement unit 13 and a local Boolean logic component 14L.

The entangled photon-pair (EPP) generator is configured to generate an entangled photon-pair comprising a first photon (p1) and a second photon (p2) to be transmitted to a recipient. The Bell-state measurement unit 13 in operation performs a Bell-state measurement on a received photon (p0) and the first photon (p1) of the entangled photon-pair and outputs at least one internal Boolean value (B12) indicative for a result of the Bell-state measurement. The Boolean logic component 14L is configured to perform a Boolean operation on a received Boolean value (B0) and the at least one internal Boolean value (B12) and transmits an output Boolean value (B2) to the recipient. In other examples the entangled photon-pair (EPP) generator generates a photon p2 that has a state entangled with that of a non-photonic qubit, for example a matter qubit, e.g. a state of an NV-center in a quantum memory.

FIG. 5 shows an example wherein specimen 11b, 11c, 11d of the intermediary node 11 of FIG. 2 form a quantum communication chain between end nodes 11a and 11e. It is apparent from FIG. 5 that arbitrary long quantum communication chains can be constructed from the component shown in FIG. 4. To extend the length of the quantum communication chain, it suffices to add one or more intermediary nodes of FIG. 4, without requiring adaptations to the other components in the chain.

From the embodiment of FIG. 5 it is also apparent that it is not necessary that the logic circuitry is restricted to a single location. This is due to the commutative property of the Boolean operations. For clarity it is presumed in the embodiment shown in FIG. 5 that each intermediary node 11b comprises a single set of elements, i.e. a single entangled photon generator, a single Bell-state measurement unit and a single Boolean logic unit. In other embodiments each intermediary node is replaced with a respective intermediary node array, each intermediary node array comprising a plurality of intermediary nodes, therewith enabling a higher production of entangled qubits between the endpoints. In example thereof, one or more of the intermediary nodes in the intermediary node arrays are provided for enabling quantum communication in the opposite direction, i.e. from the second endpoint to the first endpoint.

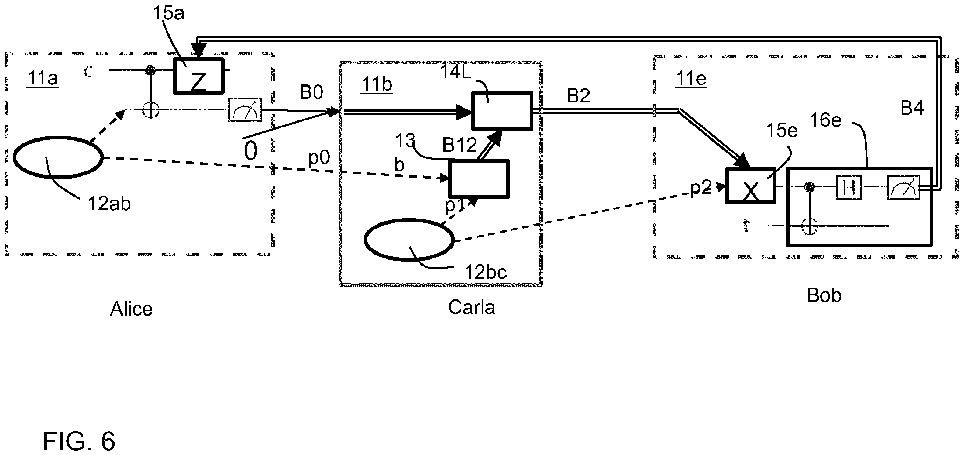

Also any unitary operations are not tied to a specific location in the network. By way of example FIG. 6 shows a quantum communication chain comprising endpoints 11a, 11c, also denoted as Alice and Bob and an intermediary node 11b, here in the embodiment of FIG. 4. The arrangement of FIG. 6 is an embodiment according to option (d) in the table presented above. Here, the endpoints 11a, 11e together perform a distributed controlled NOT (CNOT) operation on the qubit-c (control) and the qubit-t (target). In the example, a full Bell-state measurement is performed in intermediary node 11b, and both bits of the Bell-state measurement are used. The CX gate 15e of endpoint 11e performs a conditional X operation on the quantum state of the received photon p2 dependent on the Boolean output B2 transmitted by the intermediary node 11b. The quantum circuit 16e Bell-state measurement of the endpoint 11e performs a further quantum operation and a single Bell-state measurement on the output of the CX gate 15c and a second quantum state t, and transmits the Boolean value B4 indicative for the result of this measurement to the endpoint 11a. This Boolean value B4 controls a controlled Z operation by gate 15a. As is apparent from the embodiment of FIG. 6 it is not necessary that qubits c and t exist at the same time. Any local qubits may be not photonic, but e.g. NV center or other. Further more complicated distributed quantum-computing scenarios could be supported, with multiple intermediary nodes in parallel.

It is further noted that according to one option an intermediary node is provided as a quantum relay, which avoids the use of a quantum memory. According to one option an intermediary node is provided as a quantum repeater, which includes a memory. The former is advantageous in that they are more cost-efficient. The latter is advantageous in that it puts less strict requirements on synchronization.

Different approaches are possible to encode qubits using photons. According to a first approach, also denoted as dual rail approach, separate modes (or "rails") are used to represent the logical states |0〉 and |1〉. According to another approach the logical states are encoded by the number of photons in a single mode (e.g., 0 photons for |0〉 and 1 photon for | 1)). In the first approach, further various modes or degrees of freedom can be used for encoding qubits. These comprise:
Polarization modes
Spatial modes, e.g. separate or multimode
Temporal modes, using respective time-bins for the logical states
Also combinations and mutual conversions of the above-mentioned representations are possible.

Exemplary polarization bases may be denoted as Base 1 (H,V), Base 2 (P,Q) and Base 3 (L,R). Base 1 is defined by a pair of a horizontal (H) polarization mode and a vertical (V) polarization mode. Base 2 is defined by a pair (P,Q) of polarization modes with a linear polarization at an angle of +45 (P) and -45 (Q) degrees, respectively. This may also be described as an equal amount of (H) and (V) with a mutual phase difference of 0° (P) or 180° (Q), mod 360°. Base 3 is defined by a pair (L,R) of circular polarization modes that are lefthanded (L) and righthanded (R), respectively. This may also be described as an equal amount of (H) and (V) with a mutual phase difference of 90° (L) or 270° (R), mod 360°. Note that in principle, any opposite pair of points on a Bloch sphere may be used as base, of which Base 1, 2 and 3 are the canonical ones.

Likewise, when using spatial modes, e.g. using distinct optical paths, typically denoted as "Upper" (U) and "Lower" (L), a Base 1,2 and 3 may be discerned. The three bases are similar to the previous option, but with the roles of (H) and (V) replaced by (U) and (L).

The temporal modes can be used by encoding quantum information in the time domain by using distinct temporal slots or bins. A single photon's presence or absence in these time bins represents different quantum states. The three bases are similar to the previous options, but with the roles of (H) and (V) replaced by (S) and (F), respectively the slow and fast time bins.

Different modes and different bases may have different technical benefits in technical implementation and mechanical construction. For example, time-bin modes are well suited for transportation over long distances, as time differences are preserved in optical fibers and free-space transmission. For example, polarization modes are well suited for compact and stable local manipulations of modes.

As indicated above, a Bell-state measurement (BSM) may be a partial BSM or a full BSM dependent on architectural choices.
Typical components of a partial BSM-unit are Polarizing Beam Splitters (PBS), wave plates, and photon-number detectors for polarization encoding,
Beam Splitters (BS), phase shifters, and photon-number detectors for spatial encoding and Beam Splitters, delay lines, and temporal modes-to-polarization converters for temporal encoding. A full BSM-unit typically comprises in addition to the above-mentioned components non-linear optical elements.

In case the post-processing unit comprises a conditional unitary gate the following options are possible. Fast variable retarders and wave plates can be used to implement a CX and/or a CZ gate when using the polarization modes. CX gates and CZ gates can be implemented with fast switches and fast phase shifters in case the spatial degree of freedom is used. For the time-bin modes the CX gate can be implemented with fast switches, beam splitters (BS), and delay lines. In case post-processing is a conditional selection, no conditional unitary gates need to be implemented.

It suffices to perform detection in two of the three bases as specified above. When using polarization modes the detector may comprise PBS, wave plates, and single-photon detectors. For spatial modes the detector may comprise BS, phase shifters, and single-photon detectors. And for the temporal degree of freedom the detector may comprise BS, delay lines, phase shifters, and single-photon detectors.

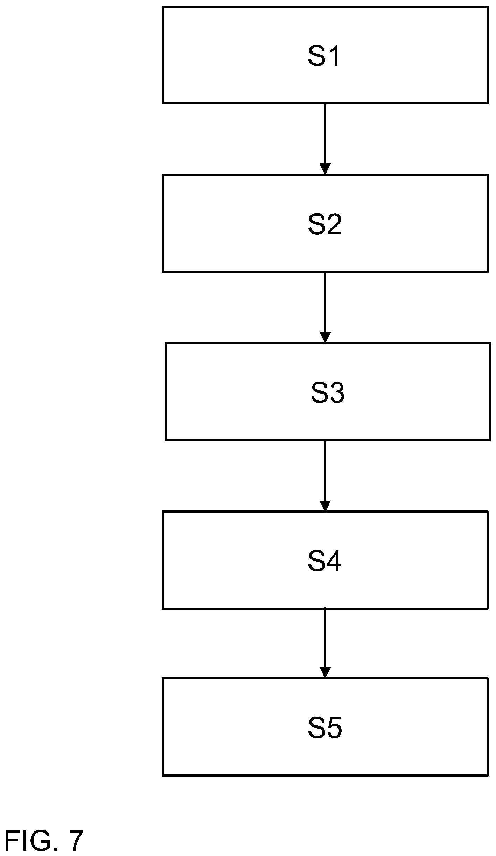

FIG. 7 schematically shows a method of entanglement swapping in a quantum information network, for example the quantum information network 1 of FIG. 3 or FIG. 5 comprising a plurality of nodes including a first and a second endpoint, e.g. endpoints 11a, 11e and a sequence of intermediary nodes linking the first and the second endpoint, for example the intermediary nodes 11b, 11c, 11d.

The method comprises a step S1 of generating a respective entangled photon-pair (EPP) for each pair of a node and a node directly succeeding that node. For example in FIG. 3 it is shown that a first entangled photon-pair p1, p2 is generated for node 11a (first endpoint) and for the node 11b (intermediary node) succeeding node 11a. Also a second entangled photon-pair p3, p4 is generated for node 11b (intermediary node) and node 11c (intermediary node) succeeding node 11b. Also a third entangled photon-pair p5, p6 is generated for node 11c (intermediary node) and node 11d (intermediary node) succeeding node 11c. Still further a fourth entangled photon-pair p7, p8 is generated for node 11d (intermediary node) and node 11e (second endpoint) succeeding node 11d. In the embodiment shown in FIG. 3 the generation of entangled photon-pair takes place at position between two subsequent nodes. The photons may for example be transmitted to their respective destination via an optical fiber of through free space. In the examples shown in FIG. 4, 5 and 6, the entangled photon pair is generated at the location of a node that is the destination of one of the photons. This has the advantage that only one long-distance optical connection is required for each pair of nodes.

The method further comprises a step S2, wherein for each intermediary node a Bell-state measurement is performed on the respective second photon of the respective photon pair generated for the pair comprising that intermediary node and the node preceding that intermediary node and the respective first photon of the respective photon pair generated for the pair comprising that intermediary node and the node succeeding that intermediary node. For example the Bell-state measurement unit 13b performs the Bell-state measurement on the photons p2 and p3. The photon p2 is the second photon of the photon pair p1, p2 generated for the first end node 11a and the intermediary node 11b. The photon p3 is the first photon of the photon pair p3, p4 generated for the intermediary node 11b and the intermediary node 11c respectively. Likewise a Bell-state measurement is performed for each of the intermediary nodes 11c, 11d. It is not necessary that the Bell-state measurement is performed at the location of the quantum repeater. By way of example the Bell-state measurement shown herein is mathematically described as a CNOT, i.e. a controlled X-gate, followed by a Hademard H-gate. Alternatively the Bell-state measurement may be performed by a Controlled-Y followed by an H-gate. Still further embodiments may comprise variations of a Controlled-X/Controlled-Y with different phases. Different intermediary nodes could use different variations of Bell-state measurements. For practical purposes it is however preferred that identical intermediary nodes are used. This simplifies manufacturing and testing steps.

In step S3, each Bell-state measurement provides at least a respective first bit that indicates whether or not the measurement is successful. The Bell-state measurement may be a partial Bell-state measurement (cases a and b in the table presented above) or may be a full Bell-state measurement (cases c and d in the table).

In step S4 it is determined whether all Bell-state measurements were successfully performed, and if that is confirmed a combined Boolean logic operation to all respective further bits. As noted, the combined Boolean logic operation may be localized, as shown for example in FIG. 3, 3A, 3B, but may alternatively be distributed as shown in FIG. 4, 5.

In step S5 quantum bit post-processing is performed in accordance with the combined Boolean logic operation. Quantum bit post-processing may be in the form of a conditional selection or in the form of a conditional unitary transformation. The various options are discussed with reference to the table presented above. Quantum bit post-processing may be performed at a single location, e.g. at the location of the receiving endpoint, as shown in FIG. 3 and 5, but may alternatively be performed in a spatially distributed manner. For example in the embodiment of FIG. 6, the quantum-bit post-processing is performed by a conditional Z-gate 15a at the location of the first end node 11a and a conditional X-gate 15c at the location of the second end node 13c. In the examples shown the controlled unitary gates used for post-processing comprise a controlled-X and/or a controlled Z. Alternative embodiments may be contemplated comprising a controlled-Y, e.g. as a single unitary gate controlled by a single control bit, or in a combination controlled by a pair of control bits further comprising a Controlled-X or a Controlled-Z. Still further options are possible e.g. a combination of gates that apply different phase shifts to the input quantum state in accordance with the control bits.

It will be clear to the skilled person that different variations would require different implementations of the Boolean-Logic Circuit. For example a Controlled-X + Controlled-Y manipulation would require an XOR of áll the input bits to control the Controlled-Y.

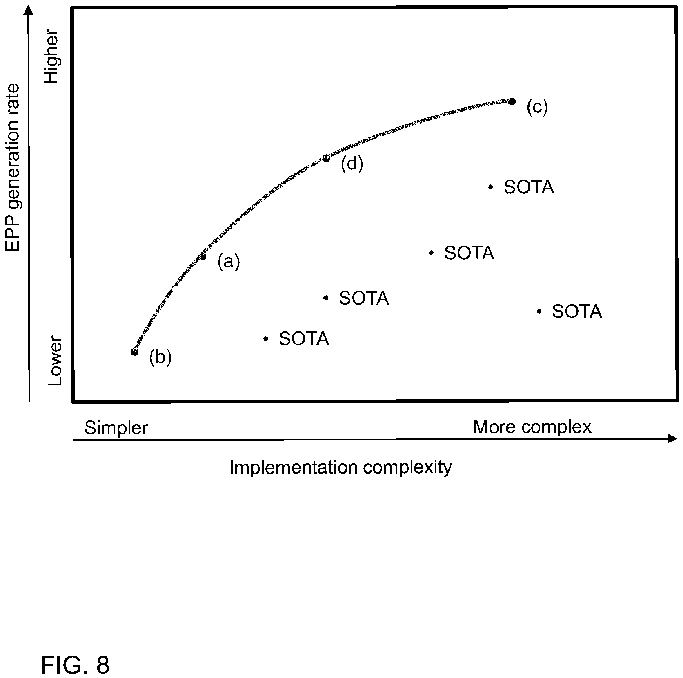

FIG. 8 schematically shows a relationship between the EPP generation rate (vertical axis) of a chain of intermediary nodes in a quantum information network and the complexity (horizontal axis) of the quantum information network. The rate indicated by the vertical axis is the efficiency with which pairs of entangled photons are generated that comprise a photon for the first end point and a photon for the second end point. The characters a-d indicate the various embodiments presented in the table above.

Embodiment (b) having the lowest complexity comprises a partial Bell-state measurement resulting in a single bit and a selection of the received quantum state conditional on the Bell-state measurement result. Embodiment (a) has a higher complexity in that the partial Bell-state measurement result is used to control a single conditional unitary operation, e.g. C-X or C-Z on the received quantum state. The higher complexity results in a higher throughput in that it is avoided that quantum states are lost in the conditional selection process. Embodiment (d) has a further increased complexity in that it requires a comprises a full Bell-state measurement, of which the measurement result is used for a conditional selection of the received quantum state. Embodiment (d) has a still further increased complexity in that it performs a double conditional unitary operation, e.g. C-X and C-Z on the received quantum state in accordance with the result of the full Bell-state measurement. However, the efficiency further increases in that for each time wherein a success is heralded in step S4, a quantum state can be successfully transferred. As schematically indicated in FIG. 8, a similar relationship exists for the naive approach in that generally with a higher complexity also a higher efficiency is achievable. However, the inventive approach as disclosed herein enables an increased efficiency with a relatively modest complexity as a combined quantum bit post-processing step is performed for a quantum communication chain with a plurality of intermediary nodes.

In the claims the word "comprising" does not exclude other elements or steps, and the indefinite article "a" or "an" does not exclude a plurality. A single component or other unit may fulfill the functions of several items recited in the claims. The mere fact that certain measures are recited in mutually different claims does not indicate that a combination of these measures cannot be used to advantage. Any reference signs in the claims should not be construed as limiting the scope.

## Claims

1. A method of entanglement swapping in a quantum information network (1) comprising a plurality of nodes including a first and a second endpoint (11a, 11e) and a sequence of intermediary nodes (11b, 11c, 11d) linking the first and the second endpoint, the method comprising:
generating (S1) a respective entangled photon-pair (EPP) for each pair of a node and a node directly succeeding that node, the EPP comprising a respective first photon to be received by the node and a respective second photon, entangled with the respective first photon to be received by the directly succeeding node,
for each intermediary node performing (S2) a Bell-state measurement on the respective second photon of the respective photon pair generated for the pair comprising that intermediary node and the node preceding that intermediary node and the respective first photon of the respective photon pair generated for the pair comprising that intermediary node and the node succeeding that intermediary node, wherein each Bell-state measurement provides at least a respective first bit that indicates whether or not the measurement is successful and a respective further bit that is indicative for a Bell-state measurement result,
determining (S3) whether all Bell-state measurements were successfully performed, and if that is confirmed performing (S4) a combined Boolean logic operation to all respective further bits,
performing (S5) a combined quantum state postprocessing that is conditional on a result of the combined Boolean logic operation.

2. The method according to claim 1, wherein the Bell-state measurements each provide a single respective further bit and wherein the combined Boolean logic operation is applied to all single respective further bits to output a single control bit.

3. The method according to claim 2, wherein the combined postprocessing is a unitary operation on the quantum state of the respective second photon received by the second endpoint, the unitary operation being controlled by the single control bit.

4. The method according to claim 2, wherein the combined postprocessing is a selection of the quantum state of the respective second photon received by the second endpoint, the selection being conditional on the single control bit.

5. The method according to claim 1, wherein the Bell-state measurements each provide a respective pair of further bits and wherein the combined Boolean logic operation is applied to all respective pairs of further bits to output a pair of control bits.

6. The method according to claim 5, wherein the combined postprocessing is a unitary operation on the quantum state of the respective second photon received by the second endpoint, the unitary operation being controlled by the pair of control bits.

7. The method according to claim 5, wherein the combined postprocessing is a selection of the quantum state of the respective second photon received by the second endpoint, the selection being conditional on the pair of control bits.

8. A quantum information network (1) comprising:
a plurality of nodes including a first and a second endpoint (11a, 11e) and a sequence of intermediary nodes (11b, 11c, 11d) linking the first and the second endpoint;
a respective entangled photon-pair (EPP) generator (12ab, 12bc, 12cd, 12de) for each pair of a node and a node directly succeeding that node, the EPP comprising a respective first photon to be received by the node and a respective second photon, entangled with the respective first photon to be received by the directly succeeding node;
a respective Bell-state measurement unit (13b, 13c, 13d) for each intermediary node (11b, 11c, 11d) to perform a Bell-state measurement on the respective second photon of the respective photon pair generated for the pair comprising that intermediary node and the node preceding that intermediary node and the respective first photon of the respective photon pair generated for the pair comprising that intermediary node and the node succeeding that intermediary node, wherein each Bell-state measurement unit provides at least a respective first bit that indicates whether or not the measurement is successful and a respective further bit that is indicative for a Bell-state measurement result;
Boolean logic (14S, 14U) for confirming whether all Bell-state measurements were successfully performed, and for performing a combined Boolean logic operation to all respective further bits;
a post-processing facility (15d) controlled by a result of the combined Boolean logic operation for performing a post-processing on a quantum state transmitted in the quantum information network (1).

9. The quantum information network (1) according to claim 8, wherein the Boolean logic (14U) for performing a combined Boolean logic operation to all respective further bits is provided at a single location.

10. The quantum information network (1) according to claim 8, wherein the Boolean logic (14L) for performing a combined Boolean logic operation to all respective further bits is distributed over a plurality of locations.

11. The quantum information network (1) according to claim 8, wherein each intermediary node in the sequence of intermediary nodes is part of a respective intermediary node array.

12. The quantum information network (1) according to claim 11, wherein each intermediary node array comprises at least one pair of intermediary nodes for enabling a bi-directional quantum communication.

13. The quantum information network according to claim 8, wherein the Bell-state measurement units each provide a single respective further bit and wherein the combined Boolean logic operation is applied to all single respective further bits to output a single control bit.

14. The quantum information network according to claim 8, wherein the Bell-state measurement units each provide a respective pair of further bits and wherein the combined Boolean logic operation is applied to all respective pairs of further bits to output a pair of control bits.

15. An intermediary node for use in the network of claim 8, comprising:
an entangled photon-pair (EPP) generator (12) to generate an entangled photon-pair comprising a first photon (p 1) and a second photon (p2) to be transmitted to a recipient;
a Bell-state measurement unit (13) configured to perform a Bell-state measurement on a received photon (p0) and the first photon (p 1) of the entangled photon-pair and to output at least one internal Boolean value (B12) indicative for a result of the Bell-state measurement;
a Boolean logic component (14L) configured to perform a Boolean operation on a received Boolean value (B0) and the at least one internal Boolean value (B12) and to transmit an output Boolean value (B2) to the recipient.

16. The intermediary node of claim 15, further comprising a quantum-memory functionality to temporarily store a quantum state of a photonic qubit.
